# EUROPÄISCHE PATENTSCHRIFT

(11) **EP 3 126 269 B1**
(45) Veröffentlichungstag und Bekanntmachung des Hinweises auf die Patenterteilung: **28.11.2018**
(21) Anmeldenummer: 15713750.6
(22) Anmeldetag: 31.03.2015
(51) Int. Cl.: B65G 23/08

(54) **ANTRIEBSSYSTEM MIT ELEKTROMOTOR UND GETRIEBE**
DRIVE SYSTEM COMPRISING AN ELECTRIC MOTOR AND A TRANSMISSION
SYSTÈME D'ENTRAÎNEMENT ÉQUIPÉ D'UN MOTEUR ÉLECTRIQUE ET D'UN MÉCANISME DE TRANSMISSION

(30) Priorität: 31.03.2014 DE 102014104494
(43) Veröffentlichungstag der Anmeldung: 08.02.2017
(73) Patentinhaber: Momentum Technologies GmbH, 41238 Mönchengladbach (DE)
(72) Erfinder: JENNINGS, Steven, 41379 Brüggen (DE)
(74) Vertreter: KNH Patentanwälte Neumann Heine Taruttis PartG mbB
(86) Internationale Anmeldenummer: PCT/EP2015/057103
(87) Internationale Veröffentlichungsnummer: WO 2015/150418

(56) Entgegenhaltungen:
- DE-A1-102008 039 837
- US-A- 5 442 248

## Beschreibung

Die vorliegende Erfindung betrifft ein Antriebssystem mit einem Elektromotor und einem Getriebe zum Antrieb einer rotierbaren Trommel, insbesondere zur Verwendung in der Fördertechnik und/oder unter hohen Sauberkeitsanforderungen.

Getriebemotoren werden an vielen Stellen im Maschinenbau eingesetzt zur Erzeugung von rotatorischen oder linearen Bewegungen. Typischerweise werden Elektromotoren mit relativ hohen Drehzahlen betrieben, wobei jedoch nur ein relativ geringes Drehmoment erzeugt wird. Mittels eines Getriebes kann die Drehzahl in einem geeigneten Verhältnis reduziert werden, wobei sich das Drehmoment entsprechend erhöht.

Elektromotoren mit einem Getriebe werden häufig in der Fördertechnik eingesetzt, um Rollen oder Förderbänder entweder direkt oder mittels Riemen, insbesondere Zahnriemen, anzutreiben.

Bei manchen Anwendungen, bei denen nur wenig Platz zur Verfügung steht und/oder besondere Anforderungen an Sauberkeit und Hygiene gestellt werden, können herkömmliche Getriebemotoren nicht optimal eingesetzt werden. Ihr Platzbedarf ist häufig zu hoch und/oder eine Reinigung mit vertretbarem Aufwand nicht möglich. Für solche Anwendungen werden oft sogenannte Trommelmotoren eingesetzt, wie diese beispielsweise in der WO 2013/143550 A1 beschrieben sind. Solche Antriebe sind sehr kompakt, weil das freie Volumen innerhalb einer Trommel benutzt wird, um einen Elektromotor und ein zugehöriges Getriebe unterzubringen. Das Drehmoment wird innerhalb der Trommel erzeugt und auf die Trommel übertragen, um damit eine Last anzutreiben. Trommelmotoren besitzen daher eine feststehende innere Welle mit einer darum rotierenden Trommel, in der der Antrieb untergebracht ist. Dies erfordert eine elektrische Zuleitung, die im Allgemeinen innerhalb der feststehenden Welle verlegt wird. Deren Abdichtung gegenüber Öl, welches entlang der Zuleitung kriechen kann, ist schwierig und kann hygienische Probleme bei der Verwendung in der Nahrungsmittelindustrie bewirken. Beispiele für Trommelmotoren sind beispielsweise der US 5,442,248, welche den Oberbegriff des Anspruchs 1 offenbart, oder der DE 10 2008 039 837 A1 zu entnehmen.

Weiterhin ist aus der GB 2472020 A ein Trommelmotor mit einem außenliegenden Stator und einem innenliegenden Rotor bekannt, bei dem Stator und Rotor innerhalb der Trommel ausgeführt sind.

Außerdem ist ein weiteres fundamentales Problem, dass für den Elektromotor nur ein relativ kleiner Durchmesser innerhalb der Trommel zur Verfügung steht, innerhalb dessen Rotor und Stator des Elektromotors untergebracht werden müssen. Dies bedeutet im Allgemeinen, dass nur ein relativ geringes Drehmoment erzeugt werden kann, da das erzeugbare Drehmoment eines Elektromotors etwa proportional zum Quadrat des Durchmessers des Elektromotors ansteigt. Auch entsteht in einem Elektromotor mit zunehmender Leistung immer mehr Wärme, die abgeführt werden muss, was bei Trommelmotoren praktisch nur über die Oberfläche der Trommel erfolgen kann, wodurch die Leistung eines Elektromotors im Inneren der Trommel stark begrenzt wird.

Ausgehend von dieser Situation ist es Aufgabe der Erfindung, ein Antriebssystem zu schaffen, welches die genannten Nachteile weitgehend vermeidet und trotzdem einfach aufgebaut, leicht zu reinigen und unter schwierigen Platzverhältnissen und hohen Sauberkeitsanforderungen einzusetzen ist.

Zur Lösung dieser Aufgabe dient ein Antriebssystem gemäß dem Anspruch 1. Vorteilhafte Ausgestaltungen, die einzeln oder in technisch sinnvollen Kombinationen miteinander zur vorliegenden Erfindung gehören, sind in den abhängigen Ansprüchen beschrieben.

Ein erfindungsgemäßes Antriebssystem hat eine feststehende Welle, einen Elektromotor, der einen um die Welle rotierbaren Rotor und einen Stator aufweist, ein Getriebe zum Herabsetzen einer Drehzahl des Rotors und eine von dem Getriebe mit einer herabgesetzten Drehzahl antreibbare konzentrisch um die Welle rotierbare Trommel, wobei der Rotor und das Getriebe innerhalb der Trommel angeordnet sind, und zeichnet sich dadurch aus, dass der Stator des Elektromotors außerhalb der Trommel angeordnet ist. Erfindungsgemäß rotiert die Trommel daher innerhalb des Luftspalts zwischen Stator und Rotor des Elektromotors, was konstruktiv und bei der Auslegung des Systems erhebliche Vorteile mit sich bringt. Anders als bei einem herkömmlichen Trommelmotor hat das erfindungsgemäße Antriebssystem zwei mechanisch unabhängige Bauteile, nämlich eine Trommel mit Rotor und Getriebe im Inneren und einen Stator, der außerhalb der Trommel angeordnet ist. Der Elektromotor kann auf diese Weise ein erheblich größeres Drehmoment als bei herkömmlichen Trommelmotoren erzeugen, da sein Durchmesser nicht mehr auf den Durchmesser der Trommel begrenzt ist. Der Platz, der bei einem Trommelmotor für Stator und Rotor zusammen zur Verfügung steht, kann nunmehr praktisch vollständig für den Rotor ausgenutzt werden.

Die Vorteile der Erfindung sind nicht auf eine bestimmte Art von Elektromotoren begrenzt, sondern können durch verschiedene Arten von Elektromotoren in ähnlicher Weise verwirklicht werden. Wichtig ist der Schritt, nur den Rotor des Elektromotors innerhalb der Trommel anzuordnen. Die übrigen von Trommelmotoren bekannten Bauteile, insbesondere das Getriebe, können praktisch unverändert übernommen werden, außer dass natürlich eine Auslegung für größere Leistung und ein höheres Drehmoment erforderlich sein kann. Es sei auch darauf hingewiesen, dass je nach Art des Getriebes die feststehende Welle nicht durchgehend sein muss, sondern durch ein als Verbindung von zwei Wellenstücken ausgebildetes Getriebe unterbrochen sein kann, was beispielsweise bei Planetengetrieben der Fall sein kann.

In einer bevorzugten Ausführungsform der Erfindung umschließt der Stator die Trommel ganz oder teilweise, und zwar im Wesentlichen nur in dem axialen Bereich, in dem innerhalb der Trommel der Rotor angeordnet ist. Im Allgemeinen wird der Rotor in einem Endbereich der Trommel angeordnet sein, jedoch ist dies keineswegs die einzige mögliche Ausführungsform. Es gibt auch Ausführungen, bei denen beispielsweise der Rotor und der außen angeordnete Stator etwa mittig zu der Trommel angeordnet sind.

Besonders vorteilhaft ist es, den Stator so auszulegen, dass er die Trommel nur teilweise umschließt, insbesondere in Form einer Halbschale bzw. einer Teilschale, die nur 180° oder weniger des Außenumfangs der Trommel umfasst. Diese Ausführungsform, die sich ohne entscheidende Nachteile für verschiedene Arten von Elektromotoren ausführen lässt, hat den Vorteil, dass der Stator bei eingebauter Trommel leicht abgenommen und beispielsweise ausgetauscht oder gereinigt werden kann.

Ein Stator in Form einer Halbschale erlaubt es auch, ein System zu verwirklichen, bei dem ein halbschalenförmiger Stator bei Bedarf durch einen zweiten halbschalenförmigen Stator zu einem die Trommel vollständig umschließenden Stator ergänzt werden kann. Einerseits eignet sich ein aus zwei Halbschalen zusammengesetzter Stator besonders für eine einfache Montage und Reinigung, andererseits kann je nach dem benötigten Drehmoment nur eine Halbschale vorgesehen werden, die dann, wenn ein höheres Drehmoment benötigt wird, durch eine zweite Halbschale ergänzt werden kann. Vorteilhaft ist es, wenn eine zweite Halbschale auf die erste Halbschale aufsteckbar gestaltet ist, insbesondere auch mit Steckverbindungen für die elektrischen Zuleitungen von Induktionsspulen in der zweiten Halbschale. Die beiden Hälften eines zweiteiligen Stators können ansonsten symmetrisch ausgestaltet sein.

Wie bereits erläutert, rotiert die Trommel in dem Luftspalt zwischen Rotor und Stator, so dass sich genau genommen der Abstand zwischen Stator und Rotor, der im Allgemeinen als Luftspalt eines Elektromotors bezeichnet wird, aus einem inneren Luftspalt zwischen dem Außenumfang des Rotors und dem Innenumfang der Trommel, aus der Dicke der Trommel und aus einem äußeren Luftspalt zwischen Trommel und Stator zusammensetzt. Bevorzugt weist der innere Luftspalt zwischen Rotor und Innenumfang der Trommel eine erste Breite von 0,5 - 2 mm auf, ebenso wie der äußere Luftspalt zwischen Außenumfang der Trommel und Innenumfang des Stators. Die Trommel selbst hat eine Dicke zwischen 0,2 und 5 mm. Insgesamt ist es natürlich wünschenswert, den Abstand zwischen Rotor und Stator möglichst klein zu machen, jedoch muss die Trommel auch bei unterschiedlichen thermischen Dehnungen oder geringen Dejustierungen von Rotor und Stator sowie bei Verschmutzungen jedenfalls berührungsfrei zwischen beiden rotierbar sein.

Besonders bevorzugt ist bei der vorliegenden Erfindung eine Ausführungsform, bei der der Stator Induktionsspulen zur Erzeugung eines elektrischen Wanderfelds aufweist, die vorzugsweise über eine elektrische Zuleitung mit mindestens einer lösbaren Steckverbindung elektrisch mit einer Stromversorgung verbindbar sind. Dadurch, dass die zum Betrieb des Elektromotors erforderliche elektrische Energie dem Stator zugeführt wird, der sich außerhalb der Trommel befindet, können gleichzeitig zwei Vorteile erreicht werden. Einerseits ist die Abführung von in dem Elektromotor erzeugter Wärme, die hauptsächlich in den Induktionsspulen entsteht, sehr viel leichter und effektiver möglich als aus dem Inneren der Trommel. Zum anderen gibt es in dem Stator keine beweglichen Bauteile, die mit Öl geschmiert werden müssten, so dass auch das Problem der Abdichtung elektrischer Zuleitungen gegen austretendes Öl entfällt. Bei Verwendung einer lösbaren Steckverbindung kann der Stator auch ohne Fachkenntnisse leicht ausgebaut und gereinigt oder gegen einen anderen Stator beispielsweise für eine andere Versorgungsspannung oder Leistungsstufe ausgetauscht werden.

In einer bevorzugten Ausführungsform der Erfindung wird der Rotor mit Gegenpolen, die auch Permanentmagneten sein können, ausgestattet, wodurch der Aufbau des Rotors im Inneren der Trommel sehr einfach wird.

Für hohe Leistungen wird vorgeschlagen, den Stator mit passiven oder aktiven Kühlmitteln auszustatten. Im einfachsten Fall sind dies insbesondere Kühlrippen an der Außenseite des Stators. Es sind allerdings auch aktive Kühlmittel angefangen von einem Gebläse bis hin zu einem Wasserkühlkreislauf möglich.

Die erfindungsgemäße Konstruktion erlaubt einige Freiheiten bei der Auslegung des gesamten Antriebssystems, weil durch die größere Dimension des Rotors mehr Drehmoment erzeugt werden kann und daher die Leistung weniger durch eine hohe Drehzahl zur Verfügung gestellt werden muss. Insgesamt führt dies dazu, dass das Getriebe bevorzugt eine Untersetzung der Drehzahl des Rotors um einen Faktor 10 - 100 bei entsprechender Erhöhung des Drehmoments bereitstellen soll.

Da sich die Trommel zwischen Rotor und Stator bewegt, ist es von Vorteil, diese aus nicht ferromagnetischem Material, vorzugsweise aus Edelstahl zu wählen. Edelstähle werden typischerweise besonders in der Nahrungsmittelindustrie bei erhöhten hygienischen Anforderungen genutzt, da sie widerstandsfähig gegen häufiges Reinigen sind. Auch eine geringe elektrische Leitfähigkeit oder ein Aufbau aus dünnen gegeneinander isolierten Blechen ist von Vorteil, um Wirbelströme in der Trommel und die damit verbundenen Verluste gering zu halten. Da nur noch wenig Wärme über die Oberfläche der Trommel abgeführt werden muss, kommen auch schlecht wärmeleitende Materialien, insbesondere Kunststoff oder Verbundmaterialien für die Trommel in Betracht.

Bei einer bevorzugten Ausführungsform der Erfindung sind der Elektromotor und das Getriebe axial hintereinander angeordnet, wie dies bei herkömmlichen Trommelmotoren mit mechanischem Getriebe auch der Fall ist. Je nach den Platzverhältnissen, insbesondere wenn es auf Grund der Bauart des Getriebes nicht möglich ist, eine Welle durch das ganze Getriebe zu führen, kann es erforderlich sein, zur Abstützung der Komponenten ein konzentrisch zur Trommel liegendes Innenrohr im Luftspalt anzuordnen, was jedoch die Funktion des Systems nicht erheblich beeinträchtigt, Der Abstand zwischen Rotor und Stator nimmt dann praktisch zwei konzentrische Bauteile, die durch drei Luftspalte getrennt sind, auf.

Bei einer anderen bevorzugten Ausführungsform ist jedoch das Getriebe quasi konzentrisch zu dem Rotor des Elektromotors angeordnet. Eine solche auch als elektromagnetisches Getriebe zu bezeichnende Anordnung wird von der Funktionsweise her in der WO 07125284 A1 beschrieben. Dieses Prinzip lässt sich vorteilhaft in die vorliegende Erfindung integrieren, indem die ohnehin im Luftspalt des Elektromotors rotierende Trommel im Bereich zwischen Rotor und Stator mit ferromagnetischen Elementen, insbesondere in axialer Richtung verlaufenden Stäben an ihrem Umfang ausgestattet wird, und zwar in einer solchen Anzahl und Ausrichtung, dass die Trommel direkt mit einer verringerten Drehzahl angetrieben wird, wie dies in der WO 07125284 A1 für den langsamer rotierenden Rotor beschrieben wird. Das Prinzip eines Motors mit konzentrischem Getriebe ist auch in dem Artikel "A New PM Machine Topology for Low-Speed, High-Torque Drives" von Kais Atallah et al. in den "Proceedings of the 2008 International Conference on Electrical Machines" (Paper ID 1455) beschrieben, aus dem auch Beispiele für geeignete Anordnungen von Spulen und Gegenpolen entnommen werden können wie sie für die vorliegende Erfindung geeignet sind. Auf diesen Artikel und seine Offenbarung wird vollinhaltlich Bezug genommen.

Ausführungsbeispiele der Erfindung, auf die diese jedoch nicht beschränkt ist, werden im Folgenden anhand der Zeichnung näher erläutert. Es zeigen:
- Fig. 1:: einen schematischen Längsschnitt durch ein erfindungsgemäßes Antriebssystems,
- Fig. 2:: eine schematische perspektivische Ansicht der Figur 1 ausgehend von einem Querschnitt im Bereich des Elektromotors und
- Fig. 3: eine schematische Ansicht der elektrischen Anordnung eines Ausführungsbeispielsmit halbschalenförmigem Stator.

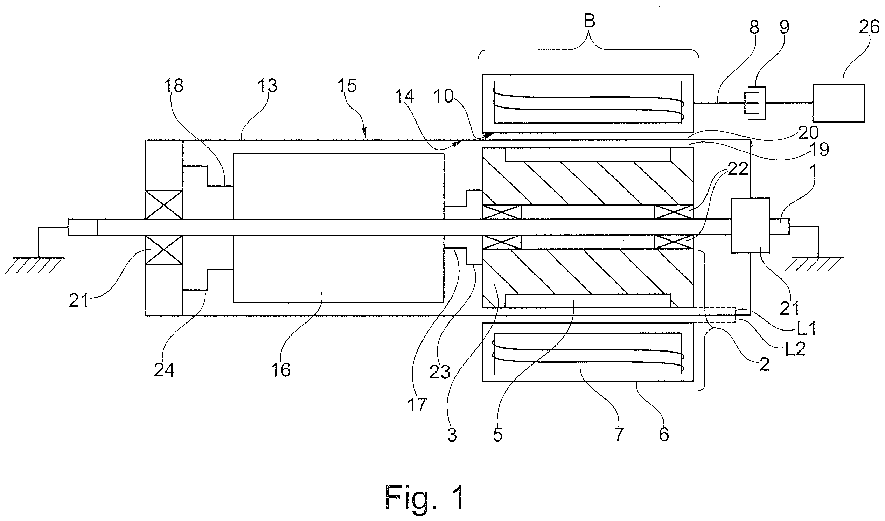

In Fig. 1 ist das erfindungsgemäße Antriebssystem schematisch im Längsschnitt dargestellt. An einer feststehenden Welle 1 ist der Rotor 3 eines Elektromotors 2 drehbar mittels Lagern 22 gelagert. In dem vorliegenden Ausführungsbeispiel weist der Rotor 3 Gegenpole 5 auf, so dass der Rotor 3 mittels von außen aufgebrachten magnetischen Wanderfeldern in Rotation versetzt werden kann. Diese Rotation wird mittels einer Rotorkupplung 23 auf eine Eingangswelle 17 eines Getriebes 16 übertragen. Das Getriebe untersetzt diese Drehung in an sich bekannter Weise, so dass eine Ausgangswelle 18 des Getriebes 16 (oder je nach Bauart dessen Gehäuse) langsamer rotiert als die Eingangswelle 17, dafür aber ein höheres Drehmoment zur Verfügung stellt. Mittels einer Trommelkupplung 24 wird diese Drehung auf eine Trommel 13 übertragen, welche den Rotor 3 und das Getriebe 16 umschließt. Diese Trommel ist mittels einer Trommellagerung 21 drehbar an der feststehenden Welle 1 gelagert und im Wesentlichen zylindrisch geformt, wobei diese Trommel 13 aber auch Abschnitte mit unterschiedlichen Durchmessern aufweisen kann. Der Rotor 3 befindet sich in einem bestimmten Bereich B in der Trommel 13. In diesem Bereich B ist die Trommel 13 außen zumindest teilweise umgeben von einem Stator 6, der Induktionsspulen 7 zur Erzeugung eines magnetischen Wanderfelds aufweist. Die Induktionsspulen 7 werden über eine elektrische Zuleitung 8 aus einer Stromversorgung 26 mit Strom versorgt, wobei eine lösbare Steckverbindung 9 zur Erleichterung des Ausbaus des Stators 6 vorhanden ist. Zwischen dem Innenumfang 10 des Stators 6 und dem Außenumfang 15 der Trommel 13 befindet sich ein äußerer Luftspalt 20 mit einer ersten Breite L1 von 0,2 - 2 mm. Weiterhin befindet sich zwischen dem Außenumfang 4 des Rotors 3 und dem Innenumfang 14 der Trommel 13 ein innerer Luftspalt 19 mit einer zweiten Breite L2 von ebenfalls etwa 0,2 - 2 mm. Die Trommel 13 selbst hat in dem Bereich B eine Dicke von 0,5 - 5 mm, so dass sich insgesamt für den Elektromotor 3 ein Abstand zwischen Rotor 3 und Stator 6 von 0,9 - 9 mm ergibt. Je kleiner dieser Abstand ist, desto höher ist der Wirkungsgrad des Elektromotors 3, jedoch muss die Trommel 13 in jedem Falle frei rotierbar zwischen Rotor 3 und Stator 6 sein, und zwar auch bei unterschiedlichen thermischen Dehnungen dieser Bauteile oder bei geringer Biegung, Unwucht oder Verschmutzung der Trommel 13.

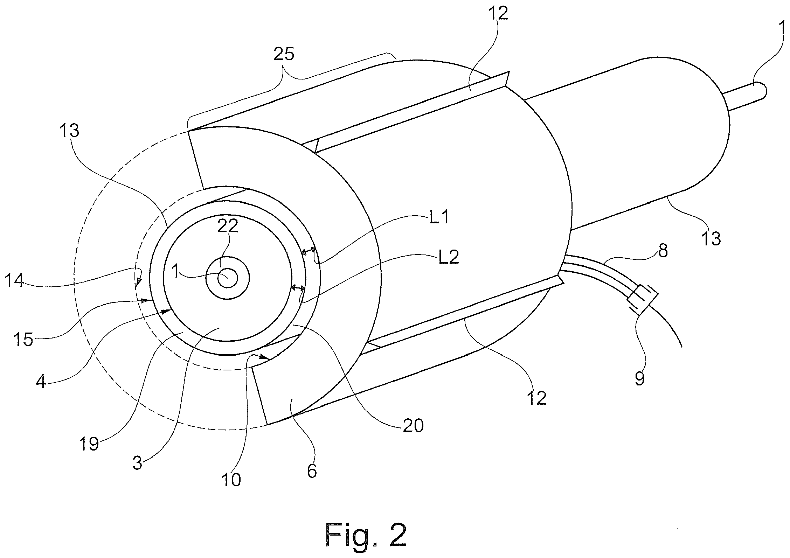

Fig. 2 zeigt schematisch eine perspektivische Ansicht des Antriebssystems ausgehend von einem Querschnitt durch den Bereich B, an dem der Elektromotor 2 angeordnet ist. Die Welle 1 ist konzentrisch von einem Lager 22 des Rotors 3 und dem Rotor 3 umgeben. Zwischen dem Außenumfang 4 des Rotors 3 und dem Innenumfang 14 der Trommel 13 befindet sich der innere Luftspalt 19 mit einer Breite L2, der im vorliegenden Bild zur besseren Veranschaulichung übertrieben groß dargestellt ist. Zwischen Außenumfang 15 der Trommel 13 und dem Innenumfang 10 des Stators 6 befindet sich der äußere Luftspalt 20 (ebenfalls übertrieben groß dargestellt) mit einer Breite L1. Außerhalb der Trommel 13 befindet sich konzentrisch zu der feststehenden Welle 1, dem Rotor 3 und der Trommel 13 der Stator 6, für den es erfindungsgemäß unterschiedliche Bauformen geben kann. Der Stator 6 kann, wie gestrichelt angedeutet, die Trommel 13 vollständig umschließen, er kann aber auch zwei- oder mehrteilig aus Teilschalen aufgebaut sein oder sogar nur aus einer Halbschale 25 bestehen, die die Trommel 13 nur um 180° ihres Umfangs oder weniger umschließt. Bei einer solchen Ausführungsform ist der Stator 6 leicht abnehmbar, was beim Reinigen, Umbau oder bei einer Änderung von Leistung bzw. Stromversorgung des Systems nützlich sein kann. Sofern der Stator 6 aus zwei symmetrischen Halbschalen 25 zusammengesetzt sein soll, ist es besonders vorteilhaft, elektrische Steckverbindungen 27 zwischen den beiden Halbschalen 25 vorzusehen, damit beim Zusammenbau von zwei Halbschalen 25 zu einem Stator 6 gleichzeitig die Stromversorgung von Induktionsspulen 7 in beiden Halbschalen verbunden werden kann. Der Stator 6 ist bevorzugt mit Kühlmitteln 12, im vorliegenden Ausführungsbeispiel Kühlrippen, ausgestattet, die für eine gute Wärmeabfuhr sorgen. Der Stator enthält keine beweglichen Teile und kann in einem komplett geschlossenen Gehäuse 11, insbesondere aus Edelstahl, untergebracht werden. Lediglich die elektrische Zuleitung 8 muss durch dieses Gehäuse 11 nach außen geführt werden. Anders als bei einer Zuleitung in das Innere der Trommel 13, in der sich Öl aus dem Getriebe 16 oder den Lagern 21, 22 befinden kann, stellt die Durchführung zu dem Stator kein Problem dar.

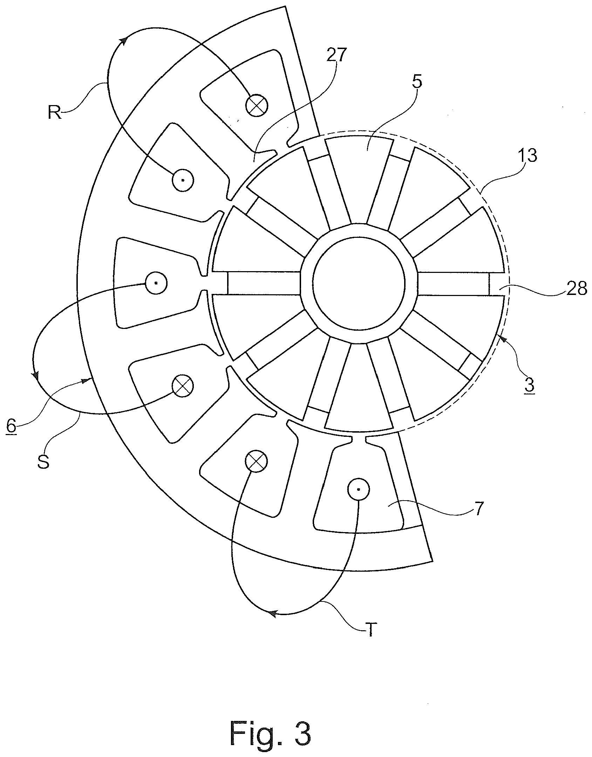

Fig. 3 zeigt in einem schematischen Querschnitt den elektrischen bzw. magnetischen Aufbau eines Ausführungsbeispiels der Erfindung mit einem halbschalenförmigen Stator 6. In diesem Ausführungsbeispiel enthält der Stator 6 drei Induktionsspulen 7 und fünf ganze und zwei halbe Magnetpole 27. Der Stator entspricht genau einem halben Stator mit zwölf Magnetpolen, der durch zwei Magnetpole hindurch halbiert ist. Drei Induktionsspulen 17 werden mit elektrischen Strömen R, S, T mit einem elektrischen Drehfeld gespeist, welches einen Rotor 3 in Drehung versetzt. Der Rotor 3 weist im vorliegenden Ausführungsbeispiel 10 Gegenpole 5 getrennt durch Schlitze 28 auf. Je nach gewünschter Drehzahl können auch mehr oder weniger Gegenpole 5 vorgesehen werden. Eine Trommel 13 ist in dieser Figur nur gestrichelt angedeutet. Bei Verwendung eines elektromagnetischen Getriebes zum Antrieb der Trommel 13 kann diese ebenfalls mit einer geeigneten Anzahl ferromagnetischer Elemente ausgestattet werden, wie dies in der WO 07125284 A1 beschrieben ist.

Grundsätzlich können für die vorliegende Erfindung magnetische Anordnungen verwendet werden, wie sie aus üblichen Trommelmotoren bekannt sind. Bei der Verwendung von halbschalenförmigen Statoren und bei der Anwendung eines elektromagnetischen Getriebes müssen weitere Bedingungen eingehalten werden. Bei der Verwendung eines halbschalenförmigen Stators und einer mehrphasigen Stromversorgung ist die Zahl der Magnetpole (zwei halbe als einer gerechnet) gleich einem geraden Vielfachen der Anzahl der Phasen, bei dreiphasigem Strom (R, S, T) also 6, 12, 18, usw. Geeignete magnetische Anordnungen für unterschiedliche Untersetzungen bei elektromagnetischen Getrieben sind aus der Literatur bekannt.

Die vorliegende Erfindung erlaubt es, Antriebssysteme nach Art eines Trommelmotors mit höherer Leistung und besserer Wärmeabfuhr zur Verfügung zu stellen, wobei auch ein außen separat angeordneter Stator eine hohe Flexibilität ermöglicht. Insbesondere kann der Stator zur Veränderung der Leistung oder zur Anpassung an eine andere Stromversorgung ohne vollständigen Ausbau der Trommel ausgewechselt werden. Andererseits kann bei fest an einem System angebautem Stator auch die Trommel einzeln herausgezogen oder ausgewechselt werden. Bei Anwendung von einem aus einer oder zwei Halbschalen bestehenden Stator kann die Flexibilität der Anordnung noch erhöht werden. Dies erlaubt eine Anwendung der Erfindung insbesondere bei Fördersystemen und ganz besonders in der Nahrungsmittelindustrie bei Vorliegen von erhöhten Anforderungen an Hygiene und Sauberkeit.

### Bezugszeichenliste:

- 1: feststehende Welle
- 2: Elektromotor
- 3: Rotor
- 4: Außenumfang des Rotors
- 5: Gegenpole
- 6: Stator
- 7: Induktionsspulen
- 8: Elektrische Zuleitung
- 9: Lösbare Steckverbindung
- 10: Innenumfang des Stators
- 11: Gehäuse des Stators
- 12: Kühlmittel
- 13: Trommel
- 14: Innenumfang der Trommel
- 15: Außenumfang der Trommel
- 16: Getriebe
- 17: Eingangswelle
- 18: Ausgangswelle
- 19: Innerer Luftspalt
- 20: Äußerer Luftspalt
- 21: Trommellagerung
- 22: Lager des Rotors
- 23: Rotorkupplung
- 24: Trommelkupplung
- 25: Halbschale
- 26: Stromversorgung
- 27: Elektrische Steckverbindung

- L1: erste Breite des äußeren Luftspaltes
- L2: zweite Breite des inneren Luftspaltes
- B: Bereich des Rotors
- R, S, T: Phasen

## Patentansprüche

1. Antriebssystem mit
- einer feststehenden Welle (1),
- einem Elektromotor (2), der einen um die Welle (1) rotierbaren Rotor (3) und einen Stator (6) aufweist,
- einem Getriebe (16) zum Herabsetzen einer Drehzahl des Rotors (3) und
- einer von dem Getriebe (16) mit einer herabgesetzten Drehzahl antreibbaren konzentrisch um die Welle rotierbaren Trommel (13), wobei der Rotor (3) und das Getriebe (16) innerhalb der Trommel (13) angeordnet sind,
**dadurch gekennzeichnet, dass** der Stator (6) des Elektromotors (2) außerhalb der Trommel (13) angeordnet ist.

2. Antriebssystem nach Anspruch 1, wobei der Stator (6) die Trommel (13) ganz oder teilweise umschließt, und zwar im Wesentlichen in dem axialen Bereich (B), in dem innerhalb der Trommel (13) der Rotor (3) angeordnet ist.

3. Antriebssystem nach Anspruch 2, wobei der Stator (6) die Trommel (13) in Umfangsrichtung nur teilweise umschließt, insbesondere in Form einer Halbschale (25) nur 180° oder weniger eines Außenumfangs (15) der Trommel (13) umfasst.

4. Antriebssystem nach einem der vorhergehenden Ansprüche, wobei der Stator aus zwei Halbschalen (25) gebildet ist, die zusammen die Trommel (13) in Umfangsrichtung vollständig umschließen, wobei die Halbschalen (25) insbesondere zusammensteckbar sind unter gleichzeitiger Herstellung von elektrischen Verbindungen (27) zwischen den Halbschalen (25).

5. Antriebssystem nach einem der vorhergehenden Ansprüche, wobei zwischen einem Außenumfang (4) des Rotors (3) und einem Innenumfang (14) der Trommel (13) ein innerer Luftspalt (19) vorhanden ist, vorzugsweise mit einer ersten Breite (L2) von 0,5 bis 2 mm.

6. Antriebssystem nach einem der vorhergehenden Ansprüche, wobei zwischen einem Innenumfang (10) des Stators (6) und einem Außenumfang (15) der Trommel (13) ein äußerer Luftspalt (20) vorhanden ist, vorzugsweise mit einer zweiten Breite (L1) von 0,5 bis 2 mm.

7. Antriebssystem nach einem der vorhergehenden Ansprüche, wobei der Stator (6) Induktionsspulen (7) aufweist, die vorzugsweise über eine elektrische Zuleitung (8) mit mindestens einer lösbaren Steckverbindung (9) elektrisch mit einer Stromversorgung (26) verbindbar sind.

8. Antriebssystem nach einem der vorhergehenden Ansprüche, wobei der Rotor (3) mit Gegenpolen (5) ausgestattet ist.

9. Antriebssystem nach einem der vorhergehenden Ansprüche, wobei der Stator (6) passive oder aktive Kühlmittel (12) aufweist, insbesondere Kühlrippen.

10. Antriebssystem nach einem der vorhergehenden Ansprüche, wobei das Getriebe (16) für eine Untersetzung der Drehzahl des Rotors (3) um einen Faktor 3 bis 100 bei entsprechender Erhöhung des Drehmoments ausgelegt ist.

11. Antriebssystem nach einem der vorhergehenden Ansprüche, wobei die Trommel (13) und/oder ein Gehäuse (11) des Stators (6) aus nicht ferromagnetischem Material, vorzugsweise Edelstahl, bestehen.

12. Antriebssystem nach einem der vorhergehenden Ansprüche, wobei das Getriebe in axialer Richtung neben dem Rotor angeordnet ist.

13. Antriebssystem nach einem der Ansprüche 1 bis 11, wobei das Getriebe konzentrisch zum Rotor angeordnet ist, indem die Trommel im Bereich des Rotors in Umfangsrichtung mit stabförmigen ferromagnetischen Elementen bestückt ist, die die Trommel im Magnetfeld von Stator und Rotor mit einer verringerten Geschwindigkeit antreiben.

## Claims

1. Drive system comprising
- a fixed shaft (1),
- an electric motor (2) which has a rotor (3), rotatable around the shaft (1), and a stator (6),
- a transmission (16) to reduce a rotational speed of the rotor (3) and
- a drum (13) which can be driven by the transmission (16) at a reduced rotational speed so as to be concentrically rotatable around the shaft, wherein the rotor (3) and the transmission (16) are arranged inside the drum (13),
**characterized in that** the stator (6) of the electric motor (2) is arranged outside of the drum (13).

2. Drive system according to claim 1, wherein the stator (6) completely or partially surrounds the drum (13) and namely substantially in the axial region (B) in which the rotor (3) is arranged inside the drum (13).

3. Drive system according to claim 2, wherein the stator (6) only partially surrounds the drum (13) in the circumferential direction, comprises in particular in the form of a half shell (25) only 180° or less of an outer circumference (15) of the drum (13).

4. Drive system according to any one of the preceding claims, wherein the stator is formed of two half shells (25) which together completely surround the drum (13) in the circumferential direction, wherein the half shells (25) can in particular be plugged together and electric connections (27) between the half shells (25) are simultaneously established.

5. Drive system according to any one of the preceding claims, wherein an inner air gap (19) is present between an outer circumference (4) of the rotor (3) and an inner circumference (14) of the drum (13), preferably with a first width (L2) of 0.5 to 2 mm.

6. Drive system according to any one of the preceding claims, wherein an outer air gap (20) is present between an inner circumference (10) of the stator (6) and an outer circumference (15) of the drum (13), preferably with a second width (L1) of 0.5 to 2 mm.

7. Drive system according to any one of the preceding claims, wherein the stator (6) has induction coils (7) which are preferably electrically connectable to a power supply (26) via an electric supply line (8) with at least one detachable plug connection (9).

8. Drive system according to any one of the preceding claims, wherein the rotor (3) is fitted with counterpoles (5).

9. Drive system according to any one of the preceding claims, wherein the stator (6) has passive or active cooling means (12), in particular cooling fins.

10. Drive system according to any one of the preceding claims, wherein the transmission (16) is designed to reduce the rotational speed of the rotor (3) by a factor of 3 to 100 with corresponding increase to the torque.

11. Drive system according to any one of the preceding claims, wherein the drum (13) and/or a housing (11) of the stator (6) consist of non-ferromagnetic material, preferably stainless steel.

12. Drive system according to any one of the preceding claims, wherein the transmission is arranged in the axial direction next to the rotor.

13. Drive system according to any one of claims 1 to 11, wherein the transmission is arranged concentrically to the rotor by the drum being fitted in the region of the rotor in the circumferential direction with rod-shaped ferromagnetic elements which drive the drum at a reduced speed in the magnetic field of stator and rotor.

## Revendications

1. Système d'entraînement avec :
- un arbre fixe (1),
- un moteur électrique (2) qui comporte un rotor (3) pouvant tourner autour de l'arbre (1), et un stator (6),
- un mécanisme de transmission (16) pour réduire la vitesse de rotation du rotor (3), et
- un cylindre (13) pouvant être entraîné de manière concentrique autour de l'arbre et par le mécanisme de transmission (16) à vitesse réduite,
le rotor (3) et le mécanisme de transmission (16) étant disposés à l'intérieur du cylindre (13),
**caractérisé en ce que** le stator (6) du moteur électrique (2) est disposé à l'extérieur du cylindre (13).

2. Système d'entraînement selon la revendication 1, dans lequel le stator (6) enserre partiellement ou totalement le cylindre (13), et est disposé essentiellement dans la zone axiale (B) à l'intérieur du cylindre (13) du rotor (3).

3. Système d'entraînement selon la revendication 2, dans lequel le stator (6) n'enserre que partiellement le cylindre (13) sur sa circonférence, notamment sous la forme d'une demi-coque (25) à 180° ou moins d'une circonférence extérieure (15) du tambour (13).

4. Système d'entraînement selon l'une des revendications précédentes, dans lequel le stator est constitué de deux demi-coques (25) qui entourent complètement le tambour (13) dans la direction circonférentielle, les demi-coques (25) pouvant notamment être raccordées en même temps que des connexions électriques (27) entre les demi-coques (25).

5. Système d'entraînement selon l'une des revendications précédentes, dans lequel il y a un entrefer interne (19) entre une périphérie externe (4) du rotor (3) et une périphérie interne (14) du cylindre (13), de préférence avec une première largeur (L2) de 0,5 à 2 mm.

6. Système d'entraînement selon l'une des revendications précédentes, dans lequel il y a un entrefer externe (20) entre une périphérie interne (10) du stator (6) et une périphérie externe (15) du cylindre (13), avec de préférence une seconde largeur (L1) de 0,5 à 2 mm.

7. Système d'entraînement selon l'une des revendications précédentes, dans lequel le stator (6) comporte des bobines d'induction (7) qui peuvent se raccorder électriquement à au moins une prise amovible (9) sur une alimentation électrique (26), de préférence via une ligne électrique (8).

8. Système d'entraînement selon l'une des revendications précédentes, dans lequel le rotor (3) est équipé de pôles opposés (5).

9. Système d'entraînement selon l'une des revendications précédentes, dans lequel le stator (6) comporte des dispositifs de refroidissement actifs ou passifs (12), en particulier des ailettes de refroidissement.

10. Système d'entraînement selon l'une des revendications précédentes, dans lequel l'engrenage (16) est conçu pour réduire la vitesse de rotation du rotor (3) d'un facteur de 3 à 100 avec une augmentation correspondante du couple.

11. Système d'entraînement selon l'une des revendications précédentes, dans lequel le cylindre (13) et/ou le carter (11) du stator (6) sont en matériau non-ferromagnétique, de préférence en inox.

12. Système d'entraînement selon l'une des revendications précédentes, dans lequel le mécanisme de transmission est disposé en direction axiale adjacente au rotor.

13. Système d'entraînement selon l'une des revendications 1 à 11, dans lequel le mécanisme de transmission est disposé de façon concentrique par au rotor, tandis que le cylindre est garni d'éléments ferromagnétiques en forme de tiges dans la direction circonférentielle dans la zone du rotor, lesquels éléments entraînant le cylindre dans le champ magnétique du stator et du rotor avec une vitesse réduite.
